# FASCICULE DE BREVET EUROPEEN

(11) **EP 3 429 717 B1**
(45) Date de publication et mention de la délivrance du brevet: **06.05.2020**
(21) Numéro de dépôt: 16721854.4
(22) Date de dépôt: 18.03.2016
(51) Int. Cl.: B01D 15/24

(54) **PROCÉDÉ DE SÉPARATION CHROMATOGRAPHIQUE ÉNERGETIQUEMENT ÉCONOME**
VERFAHREN FÜR ENERGIESPARENDE CHROMATOGRAPHISCHE TRENNUNG
METHOD OF ENERGY-EFFICIENT CHROMATOGRAPHIC SEPARATION

(43) Date de publication de la demande: 23.01.2019
(73) Titulaire: Parmentier, François, 38400 Saint Martin d'Héres (FR)
(72) Inventeur: Parmentier, François, 38400 Saint Martin d'Héres (FR)
(74) Mandataire: Garavelli, Paolo
(86) Numéro de dépôt international: PCT/FR2016/000053
(87) Numéro de publication internationale: WO 2016/146905

(56) Documents cités:
- EP-A1- 1 338 316
- FR-A- 1 517 537

## Description

### DOMAINE DE L'INVENTION

La présente invention est un procédé de séparation chromatographique économe en énergie.

### ARRIERE PLAN DE L'INVENTION

La chromatographie est une technique de séparation qui permet la séparation puissante des composés d'une charge sous l'effet d'une élution au contact d'une phase stationnaire.

La chromatographie présente cependant l'inconvénient de diluer fortement les composants de la charge dans un tiers corps, une phase liquide en chromatographie en phase liquide.

En chromatographie préparative les composés séparés, ou produits, doivent être séparés de ce tiers corps et isolés au cours d'une étape supplémentaire.

Lorsque le fluide vecteur est un liquide, il faut concentrer l'effluent du chromatographe afin de récupérer le produit. Cela nécessite généralement d' évaporer de grandes masses de solution très diluée, souvent à moins de 1% molaire, voire moins de 0,1% molaire.

La consommation énergétique est donc très élevée.

L'étape de séparation est une étape clé pour la viabilité de la méthode.

D'autre part, il est particulièrement intéressant de réaliser une chromatographie préparative de façon continue et non séquentielle .

Dans l'art antérieur, on utilise essentiellement dans ce but des dispositifs dits de Lit Mobile Simulé. On simule un déplacement d'un garnissage solide en le séquençant en un train de lits fixes individuels, lits individuels aux bornes desquels on déplace le point d'alimentation et les points de soutirage des produits. Ces dispositifs ont une efficacité modérée et sont de facto essentiellement discontinus dans leur gestion. Ils sont surtout utilisés en phase liquide.

On a également proposé des dispositifs annulaires proprement continus (en anglais CAC pour Continuous Annular Chromatography, ainsi abrégé dans ce document)) dans lesquels la séparation est assurée continûment en alimentant en mélange à séparer une section amont d'un lit annulaire rotatif alimenté sur cette même face par un éluant.

Le dispositif CAC représente cependant une excellente solution de principe à la mise en oeuvre d'une chromatographie continu dans la mesure ou il permet une projection spatiale de la séquence temporelle de n'importe quel chromatogramme.

Le brevet US 3374607A de Fisher Robert et al divulgue un procédé de chromatographie en phase gaz dans lequel les composants de la charge sont condensables simultanément et ensuite séparés (col 3, l. 2-4, 1. 20-23). Ce document ne divulgue pas et n'évoque pas une utilisation de l'énergie dégagée par la condensation des coupes condensables pour fournir de l'énergie au procédé. Sa consommation énergétique est élevée.

La demande de brevet EP 1 338 316 A1 de Hamende et al divulgue un procédé de chromatographie en phase liquide pour lequel on utilise une vapeur de solvant primaire issue de l'évaporation d'une coupe chromatographique pour alimenter par contact indirect l'évaporateur de solvant secondaire d'une autre coupe chromatographique. Le procédé oblige à conduire la vaporisation primaire à une température et une pression supérieure à la vaporisation secondaire. Cette méthode indirecte ne permet pas d'utiliser par exemple la vapeur issue de l'évaporation d'une coupe pour vaporiser cette même coupe, car aucun outil de compression n'est utilisé dans le procédé décrit. Rien ne divulgue ni n'évoque l'utilisation d'une pompe à chaleur pour réaliser ce couplage énergétique.

La demande de brevet PCT/FR 11/000137 de Parmentier présente un garnissage pour la chromatographie constitué d'un matériau poreux monolithique multicapillaire comprenant des conduits capillaires substantiellement rectilignes et parallèles entre eux. Elle décrit également des appareils de chromatographie annulaire continue axiale et radiale utilisant ces garnissages.

### BREVE DESCRIPTION DE L'INVENTION

L'invention est un procédé de chromatographie en phase liquide, gazeuse ou supercritique dans lequel on fait circuler, sur un chromatographe (6) contenant une phase stationnaire, une charge (1) comprenant des composants à séparer entraînée par un fluide vecteur (2), ledit procédé étant caractérisé en ce que :
(a) on obtient à la sortie du chromatographe une pluralité de coupes chromatographiques (3, 4) comprenant au moins un composant de la charge et le fluide vecteur dans une première phase fluide,
(b) on impose un changement d'état à au moins une desdites coupes chromatographiques (3, 4) de sorte à obtenir au moins une coupe de fluide vecteur purifié dans une deuxième phase fluide différente de la première phase fluide en séparant ledit fluide vecteur du composant de la charge,
(c) on impose un changement d'état inverse de celui de l'étape (b) à au moins une coupe de fluide vecteur purifié obtenue à l'étape (b) de façon à obtenir au moins une coupe de fluide vecteur purifié dans une troisième phase fluide différente de la deuxième phase fluide,
et en ce que l'on couple les énergies de changement d'état de la première phase fluide à la deuxième phase fluide et de la deuxième phase fluide à la troisième phase fluide de la même ou d'une autre coupe de fluide vecteur purifié, ledit couplage comprenant un transfert de chaleur à l'aide d'une pompe à chaleur.

En particulier le procédé est caractérisé en ce que la pompe à chaleur met en œuvre une recompression de vapeur du fluide vecteur dans un flux dudit fluide vecteur dans le procédé de chromatographie.

En particulier le procédé est caractérisé en ce que ladite pompe à chaleur met en œuvre une recompression de vapeur d'un fluide frigorigène différent du fluide vecteur dans un flux de fluide externe au procédé de chromatographie.

En particulier le procédé est caractérisé en ce que la première phase fluide est liquide, la deuxième phase fluide est gazeuse et la troisième phase fluide est liquide, la pluralité de coupes chromatographiques (3, 4) obtenues à la sortie du chromatographe comprenant au moins un composant de la charge et le fluide vecteur à l'état liquide, et en ce que :
- à l'étape (b), on vaporise au moins une desdites coupes chromatographiques de sorte à obtenir d'une part ledit composant de la charge à l'état liquide concentré et d'autre part le fluide vecteur purifié à l'état de vapeur,
- à l'étape (c), on condense ledit fluide vecteur purifié obtenu à l'étape (b),
- au moins une partie de l'énergie de la condensation du fluide vecteur vaporisé est récupérée et utilisée pour fournir au moins une partie de l'énergie nécessaire à la vaporisation du fluide vecteur d'au moins une coupe chromatographique.

En particulier le procédé est caractérisé en ce que la première phase fluide est gazeuse, la deuxième phase fluide est liquide et la troisième phase fluide est gazeuse, la pluralité de coupes chromatographiques obtenues à la sortie du chromatographe comprenant chacune au moins un composant de la charge et le fluide vecteur à l'état gazeux, et en ce que :
- à l'étape (b), on condense au moins une desdites coupes chromatographiques de sorte à séparer un composant de la charge et le fluide vecteur condensé,
- à l'étape (c), on vaporise le fluide vecteur condensé obtenu à l'étape (b) et on introduit ledit fluide à l'état gazeux dans le chromatographe,
- au moins une partie de l'énergie dégagée par la condensation de ladite au moins une coupe chromatographique est utilisée pour fournir au moins une partie de l'énergie nécessaire à ladite vaporisation du fluide vecteur condensé.

En particulier le procédé est caractérisé en ce que la première phase fluide est à l'état supercritique, la deuxième phase fluide est liquide et la troisième phase fluide est à l'état gazeux ou supercritique, la pluralité de coupes chromatographiques obtenues à la sortie du chromatographe comprenant chacune au moins un composant de la charge et le fluide vecteur à l'état supercritique, et en ce que :
- à l'étape (b), on condense au moins une desdites coupes chromatographiques de sorte à séparer un composant de la charge et le fluide vecteur condensé,
- à l'étape (c), on vaporise le fluide vecteur condensé obtenu à l'étape (b) et on introduit ledit fluide à l'état supercritique dans le chromatographe,
- au moins une partie de l'énergie dégagée par la condensation de ladite au moins une coupe chromatographique est utilisée pour fournir au moins une partie de l'énergie nécessaire à ladite vaporisation du fluide vecteur condensé.

En particulier le procédé est caractérisé en ce que au moins un composant de la charge et au moins une partie du fluide vecteur sont condensables simultanément dans des liquides substantiellement immiscibles et séparables par décantation dans les conditions du procédé.

En particulier le procédé est caractérisé en ce que la recompression de vapeur est effectuée par un éjecteur dont le fluide moteur à une composition proche de celle du fluide entraîné.

En particulier le procédé est caractérisé en ce que la recompression de vapeur est effectuée par recompression mécanique de vapeur.

En particulier le procédé est caractérisé en ce que la compression est mise en œuvre par au moins un compresseur dont le rapport de compression est inférieur à 3, de préférence inférieur à 1,5, et plus préférentiellement inférieur à 1,15.

L'invention est également un système de chromatographie en phase liquide, gazeuse ou supercritique comprenant un chromatographe (6) contenant une phase stationnaire destiné à la circulation d'une charge (1) comprenant des composants à séparer entraînée par un fluide vecteur (2) et à l'obtention d'une pluralité de coupes chromatographiques comprenant au moins un composant de la charge et le fluide vecteur dans une première phase fluide, ledit système étant caractérisé en ce qu'il comprend :
- un moyen adapté pour imposer un premier changement d'état à au moins une desdites coupes chromatographiques (3, 4) de sorte à purifier le fluide vecteur dans une deuxième phase fluide différente de la première phase fluide en le séparant du composant de la charge,
- un moyen adapté pour imposer à au moins une coupe de fluide vecteur purifié un second changement d'état inverse du premier de façon à obtenir une troisième phase fluide différente de la deuxième phase fluide, et
- une pompe à chaleur adaptée pour coupler les énergies du premier et du second changement d'état

### BREVE DESCRIPTION DES DESSINS

- La figure 1 est un schéma d'un procédé suivant l'invention utilisant un chromatographe en phase liquide continu.
- La figure 2 est un schéma d'un procédé suivant l'invention utilisant un chromatographe en phase liquide continu caractérisé en ce que la boucle de fluide frigorigène est externe aux flux procédé
- La figure 3 est un schéma d'un procédé suivant l'invention utilisant un chromatographe en phase liquide continu caractérisé en ce que le fluide vecteur est purifié dans une colonne à distiller comportant une boucle de RMV
- La figure 4 est un schéma d'un procédé suivant l'invention utilisant un chromatographe en phase liquide continu caractérisé en ce que le fluide vecteur est purifié dans une colonne à distiller comportant une boucle de RMV externe aux flux procédé.
- La figure 5 représente un exemple du procédé suivant l'invention avec un gaz vecteur condensable et servant de fluide frigorigène.

### DESCRIPTION DETAILLEE DE L'INVENTION

Dans un procédé de chromatographie, le flux de fluide éluant est de manière générale prédominant devant le flux de charge à séparer, en termes de débit molaire en particulier.

La dilution molaire de la molécule d'intérêt dans le fluide éluant peut atteindre un facteur 10, voir un facteur 100 ou 1000. Plus la séparation sera difficile, plus la dilution sera grande.

Il apparait en général difficile de séparer ces solutions diluées efficacement et à faible coût.

La récupération de cette molécule d'intérêt demande en général une étape supplémentaire de concentration, réalisée par un procédé par membranes par exemple, mais plus généralement par une simple évaporation du solvant dans un procédé de chromatographie en phase liquide.

La dépense énergétique liée à la vaporisation de grandes masses de liquide éluant pour en concentrer les produits issus de la séparation est donc élevée.

L'invention est un procédé de chromatographie en phase liquide, gazeuse ou supercritique dans lequel on fait circuler, sur un chromatographe contenant une phase stationnaire, une charge comprenant des composants à séparer entraînée par un fluide vecteur, ledit procédé étant caractérisé en ce que :
(a) on obtient à la sortie du chromatographe une pluralité de coupes chromatographiques comprenant au moins un composant de la charge et le fluide vecteur dans une première phase fluide,
(b) on impose un changement d'état à au moins une desdites coupes chromatographiques de sorte à obtenir au moins une coupe de fluide vecteur purifié dans une deuxième phase fluide différente de la première phase fluide en séparant ledit fluide vecteur du composant de la charge,
(c) on impose un changement d'état inverse de celui de l'étape (b) à au moins une coupe de fluide vecteur purifié obtenue à l'étape (b) de façon à obtenir au moins une coupe de fluide vecteur purifié dans une troisième phase fluide différente de la deuxième phase fluide,
et en ce que l'on couple les énergies de changement d'état de la première phase fluide à la deuxième phase fluide et de la deuxième phase fluide à la troisième phase fluide de la même ou d'une autre coupe de fluide vecteur purifié, ledit couplage comprenant un transfert de chaleur à l'aide d'une pompe à chaleur.

Cette invention peut en particulier se réaliser de trois façons privilégiées :
Cas 1/ La première phase fluide est liquide, la deuxième phase fluide est gazeuse et la troisième phase fluide est liquide.

L'invention est alors en particulier un procédé de chromatographie en phase liquide dans lequel on fait circuler, sur un chromatographe contenant une phase stationnaire, une charge comprenant des composants à séparer entraînée par un fluide vecteur à l'état liquide, ledit procédé étant caractérisé en ce que :
- on obtient à la sortie du chromatographe une pluralité de coupes chromatographiques comprenant au moins un composant de la charge et le fluide vecteur à l'état liquide,
- on vaporise au moins une desdites coupes chromatographiques de sorte à concentrer au moins un composant de la charge à l'état liquide et à obtenir le fluide vecteur purifié à l'état de vapeur,
- le fluide vecteur gazeux est condensé
- l'énergie de condensation contenue dans le fluide vecteur vaporisé est récupérée lors de sa condensation et utilisée pour fournir directement ou indirectement l'énergie nécessaire à la vaporisation d'au moins une coupe chromatographique par une boucle de pompe à chaleur.

Cas 2/ La première phase fluide est gazeuse, la deuxième phase fluide est liquide et la troisième phase fluide est gazeuse.

L'invention est également en particulier un procédé de chromatographie en phase gaz dans lequel on fait circuler, dans un chromatographe contenant une phase stationnaire, une charge comprenant des composants à séparer entraînée par un fluide vecteur à l'état gazeux, le fluide vecteur étant condensable en un liquide dans les conditions du procédé, ledit procédé étant caractérisé en ce que :
- on obtient à la sortie du chromatographe une pluralité de coupes chromatographiques comprenant chacune au moins un composant de la charge et le fluide vecteur à l'état gazeux,
- on condense au moins une desdites coupes chromatographiques de sorte à séparer un composant de la charge et le fluide vecteur condensé,
- on vaporise le fluide vecteur condensé et on introduit ledit fluide à l'état gazeux dans le chromatographe,
- l'énergie dégagée par la condensation de ladite au moins une coupe chromatographique est utilisée pour fournir directement ou indirectement l'énergie nécessaire à ladite vaporisation du fluide vecteur condensé

Cas 3/ La première phase fluide est à l'état supercritique, la deuxième phase fluide est liquide et la troisième phase fluide est à l'état gazeux ou supercritique.

L'invention est également en particulier un procédé de chromatographie en phase supercritique dans lequel on fait circuler, dans un chromatographe contenant une phase stationnaire, une charge comprenant des composants à séparer entraînée par un fluide vecteur à l'état supercritique, le fluide vecteur étant condensable en un liquide dans les conditions du procédé, ledit procédé étant caractérisé en ce que :
- on obtient à la sortie du chromatographe une pluralité de coupes chromatographiques comprenant chacune au moins un composant de la charge et le fluide vecteur à l'état supercritique,
- on condense au moins une desdites coupes chromatographiques de sorte à séparer un composant de la charge et le fluide vecteur condensé,
- on vaporise le fluide vecteur condensé et on introduit ledit fluide à l'état supercritique dans le chromatographe,
- l'énergie dégagée par la condensation de ladite au moins une coupe chromatographique est utilisée pour fournir directement ou indirectement l'énergie nécessaire à ladite vaporisation du fluide vecteur condensé

Par pompe à chaleur on entend un moyen permettant de transférer de l'énergie thermique d'une source froide vers une source chaude.

On citera entre autre comme systèmes qualifiés de pompe à chaleur :
- La machine à recompression de vapeur (ou pompe à chaleur usuelle)
- La pompe à chaleur à absorption de gaz
- La pompe à chaleur à effet Peltier
- La pompe à chaleur à compression de gaz ou froid Stirling
- La pompe à chaleur thermoacoustique
- La pompe à chaleur à chaleur thermomagnetique

En particulier ce transfert thermique se fait par l'intermédiaire d'un fluide dit frigorigène à l'état liquide sous basse pression, mis en ébullition par contact avec une source de chaleur froide, et condensé sous plus haute pression au contact d'un puit thermique chaud. Le moteur du procédé est une recompression de la vapeur du fluide frigorigène entre la vaporisation et la condensation.

On couple ainsi thermiquement la condensation et la vaporisation du fluide vecteur.

La compression sera avantageusement conduite par une compression mécanique de vapeur. On entend par là un moyen de remonter la pression d'un fluide gazeux par une action mécanique, comme par exemple un compresseur rotatif, alternatif, un surpresseur axial, un ou des ventilateurs, un éjecteur.

Avantageusement ce procédé suivant l'invention est caractérisé en ce que la vapeur est comprimée par un éjecteur fonctionnant avec le fluide frigorigène gazeux sous pression comme fluide moteur. On obtient ainsi un fonctionnement particulièrement simple et peu couteux en investissement.

Le terme coupe chromatographique signifie les coupes distinctes contenant les différents composants de la charge séparés et le fluide vecteur élué, coupes effectuées sur le fluide vecteur à la sortie du chromatographe.

Suivant une voie de réalisation de l'invention, le transfert de chaleur de la source froide à la source chaude est réalisé à l'aide d'une compression effectuée sur le fluide vecteur du procédé chromatographique à l'état gazeux. Avantageusement, cette opération est réalisée sur une boucle de recyclage du flux de fluide vecteur dans le procédé de chromatographie, c'est-à-dire sur les flux procédés internes aux flux du procédé chromatographique.

La multiplicité des coupes chromatographiques issues du procédé rend délicate et difficile la gestion des flux de vapeur collectés en différents points du procédé, obtenus sous des pressions et à des températures différentes, et alimentant une multiplicité de séparateurs annexes et d'échangeurs de chaleurs. Une optimisation énergétique poussée d'un réseau constitué d'une multiplicité de rebouilleurs et de condenseurs couplés peut se révéler instable et difficile à conduire, lorsque la boucle de fluide frigorigène est connectée et communique directement avec la boucle procédé par un flux matière.

D'autre part le fluide vecteur utilisé pour la séparation chromatographique n'a pas de raison de constituer un fluide frigorigène de choix thermodynamiquement efficace et facile à comprimer autrement que fortuitement. En particulier l'énergie électrique à fournir par le compresseur peut être minimisée par un choix judicieux du fluide caloporteur ou frigorigène, occasionnant une économie sur une énergie noble et chère et des investissements plus faibles.

Le fluide vecteur est généralement inflammable, souvent toxique et instable thermiquement et corrosif. Les mélanges de solvants d'élutions sont fréquents en chromatographie, ces mélanges ne se comportent pas comme des fluides purs, et rentrent en ébullition dans une gamme de températures correspondant à des compositions variables. Ceci constitue une difficulté supplémentaire quand à leur utilisation directe comme fluide frigorigène et provoque un surdimensionnement des compresseurs et échangeurs..

Enfin les traces de solutés provenant de la charge résiduelles dans le fluide vecteur gazeux risquent de perturber le procédé, par leur accumulation au niveau des condenseurs (formation éventuelle de solide, démixion liquide liquide), ou leur décomposition thermique, par le risque de corrosion qu'elles peuvent représenter, etc...

Avantageusement le couplage peut donc être réalisé par un fluide frigorigène différent du fluide vecteur dans une boucle de fluide externe aux flux du procédé de chromatographie. On limite ainsi la complexité du procédé, on garde le choix du fluide frigorigène qui peut être choisi de façon optimale pour ses qualités thermodynamiques et pour ses caractéristiques optimales en terme de stabilité, de toxicité et d'inflamabilité.

Suivant l'invention cet échange de chaleur est effectué de façon à diminuer la consommation d'énergie thermique par le procédé.

On notera que la grande dilution des coupes chromatographiques inhérente à la chromatographie fait que les points d'ébullition et de condensation du fluide vecteur pur et du fluide vecteur contenant une faible concentration en composé de la charge issue du chromatographe sont très proches . Cet écart peut être de l'ordre de quelques degrés voire de moins de 1 degré centigrade. Cette particularité rend extrêmement performante la méthode d'optimisation énergétique comportant une recompression mécanique de vapeur ou RMV en chromatographie.

En effet une pompe à chaleur pourra travailler avec une très faible différence de température entre la zone froide et la zone chaude, et donc avec de très faibles taux de compression.

On pourra obtenir ainsi d'excellentes performances énergétiques, supérieures à celles d'un évaporateur dix effets ou quarante effets, voire cent effets par exemples, et rendre la séparation chromatographique peu couteuse en termes de coûts opératoire.

La concentration molaire du fluide concentré délivré en sortie du procédé pourra atteindre par exemple entre quelques % et quelques dizaines de % en produit provenant de la charge.

En particulier elle pourra être comprise entre 1% et 70% molaire en produit provenant de la charge. Plus particulièrement elle pourra être comprise entre 3% et 30% molaire en produit provenant de la charge. De préférence elle pourra être comprise entre 5% molaire et 15% molaire en produit provenant de la charge.

On obtient ainsi une considérable économie d'énergie.

La pression de vapeur du fluide vecteur au dessus d'une solution concentrée de celui-ci peut être approximée par une loi de Raoult. Une dilution à 70 % signifie en général une pression de vapeur proche de 70% de celle dudit fluide pur. Le taux de compression du compresseur sera donc faible.

Avantageusement les rapports de compressions du ou des compresseurs sont inférieurs à 3, de préférence inférieurs à 1,5, et encore plus préférentiellement inférieurs à 1,15.

Avantageusement un seul étage de compression est suffisant.

On va maintenant examiner plus précisément les conditions de réalisation du cas 1.

Avantageusement l'énergie de condensation du fluide vecteur évaporé provenant de la concentration d'une coupe chromatographique particulière est utilisée pour évaporer le fluide vecteur de ladite coupe diluée.

En effet les charges thermiques s'égalisent et une variation de marche est automatiquement compensée.

Le transfert d'énergie amène au moyen de ladite vaporisation, à la séparation d'une phase concentrée en au moins un composé de la charge et d'un fluide vecteur purifié
Suivant l'invention cet échange de chaleur est effectué de façon à diminuer la consommation d'énergie thermique par le procédé. On entend par là que l'énergie nécessaire à échauffer ou vaporiser une coupe chromatographique à l'état liquide est prélevée dans le fluide vecteur dans son circuit de retour vers le chromatographe, ou que l'énergie produite lors du refroidissement ou de la condensation d'une coupe chromatographique à l'état vapeur est transférée dans son circuit de retour vers le chromatographe au fluide vecteur en provenant.

On diminue ainsi par un tel couplage le besoin d'énergie thermique inhérent au réchauffage ou à la vaporisation de la coupe chromatographique, en récupérant cette énergie dans un flux ou elle se trouve accessible.

Suivant l'invention, cet échange de chaleur mène à une meilleure séparation du ou des composants de la charge présents dans la coupe chromatographique conjointement à la purification du fluide vecteur.

Par fluide vecteur alimentant le chromatographe on entend en particulier le fluide vecteur purifié à des degrés divers dans la boucle du procédé alimentant le chromatographe.

Le changement de phase entre un liquide et une vapeur est à la fois un phénomène très consommateur d'énergie et largement utilisé dans les techniques de purification des molécules.

En particulier le fluide vecteur pourra être dans un état liquide proche du point critique dans le chromatographe.

On sait en effet qu'au voisinage du point critique les chaleurs latentes de vaporisation sont très faibles.

Il est ainsi possible de produire des effluents très purs à faible coût énergétique.

De préférence, ce couplage énergétique est effectué par une recompression mécanique de vapeur (ou RMV) effectuée autour de la boucle du fluide vecteur de façon à améliorer l'efficacité énergétique du procédé.

Avantageusement cette RMV permet de coupler l'énergie nécessaire à la vaporisation d'une ou de plusieurs coupes chromatographique et l'énergie dégagée par la recondensation du fluide vecteur gazeux.

La recompression mécanique de vapeur peut en particulier être effectué soit directement sur le fluide vecteur vaporisé en recomprimant celui-ci, soit indirectement à l'aide d'une pompe à chaleur auxiliaire.

Le procédé consiste en particulier à vaporiser totalement ou partiellement le flux de fluide vecteur et de produit issu du chromatographe dans un évaporateur en faisant intervenir la condensation d'un fluide frigorigène sous pression, qui cède son énergie thermique au fluide vecteur. Ce frigorigène peut en particulier alimenter le second côté d'un échangeur de chaleur à contact indirect. Les coefficients de transfert de chaleur en condensation et évaporation étant excellents, la surface d'échange nécessaire sera faible et l'évaporateur compact et peu coûteux.

Le fluide frigorigène liquide produit par l'étape précédente est évaporé dans un rebouilleur sous une pression inférieure à sa pression régnant dans l'évaporateur en condensant le fluide vecteur gazeux. Le fluide vecteur liquide après condensation retourne éventuellement alimenter le chromatographe.

Le fluide frigorigène peut être constitué par le fluide vecteur lui-même. En particulier le fluide vecteur vaporisé séparé des molécules de la charge est condensé sous pression dans les échangeurs servant à vaporiser les coupes chromatographiques issues du chromatographe, est condensé, et alimente le chromatographe en liquide vecteur pur.

On pourra avec un tel schéma opérer une récupération et un recyclage très poussés du fluide vecteur qui tournera dans le procédé en boucle fermé.

Avantageusement toutes les coupes de liquide vecteur liquide issues du chromatographe sont évaporées sous l'action d'un seul compresseur dans le procédé.

Avantageusement suivant l'invention la phase vecteur liquide est purifiée en sortie du chromatographe par distillation dans une colonne à distiller de façon à récupérer la charge en pied de colonne et le fluide vecteur pur en tête de colonne, l'énergie nécessaire à la vaporisation du liquide en pied de colonne et l'énergie produite par la condensation du fluide vecteur vaporisé en tête de colonne étant couplées par une recompression mécanique de vapeur.

Cette RMV sera réalisée sur le flux procédé, ou sur un flux distinct par une pompe à chaleur travaillant avec un fluide frigorigène différent de la phase éluante.

Avantageusement ce couplage est réalisé par une boucle de fluide externe aux flux du procédé de chromatographie.

Avantageusement des composants issus de la charge se séparent à l'état liquide du liquide vecteur concentré dans les conditions du procédé.

Avantageusement dans ce cas ils sont séparés par décantation.

On pourra ajouter au procédé une étape simple de purification du fluide vecteur vaporisé et recondensé après récupération ou couplage énergétique avec les coupes chromatographiques comme un entraînement à la vapeur, une distillation, une extraction liquide liquide, un flash, une décantation, une séparation par membrane (pervaporation, osmose inverse, nanofiltration, ...) etc...

On pourra ajouter au procédé une étape simple de purification du fluide vecteur vaporisé comme une distillation, une extraction gaz liquide, etc...

En particulier lorsque cette purification sera faite par entrainement par la vapeur du fluide vecteur liquide, la production de la vapeur nécessaire pourra être faite en récupérant la puissance cédée au fluide vecteur ou au fluide frigorigène vaporisé par le compresseur. Celle-ci se traduit par une surchauffe et donc une chaleur sensible qui peut être récupérée pour évaporer du fluide vecteur sous forme liquide.

Suivant une variante de ce procédé, on pourra réaliser un cycle de pompe à chaleur par RMV autour de cette colonne d'entrainement. Avantageusement cette boucle autour de la colonne et la boucle de fluide vecteur autour du chromatographe utiliseront le même compresseur.

Avantageusement des composants de la charge issus du chromatographe sont condensables en des solides dans un fluide vecteur liquide concentré par évaporation dans les conditions du procédé.

Avantageusement ces solides sont séparés par extraction dans un solvant immiscible au fluide vecteur liquide.

Avantageusement ce solvant est introduit dans le mélange en amont du niveau ou au niveau de la vaporisation du fluide vecteur issu du chromatographe.

On pourra ajouter au procédé une étape simple de purification de la charge condensée et séparée comme une distillation, un entraînement à la vapeur, une extraction liquide liquide, un flash, une cristallisation, une séparation par membrane (pervaporation, osmose inverse, ...) afin de la séparer des dernières traces de fluide vecteur.

Ces traces de fluide vecteur seront avantageusement récupérées et recyclées

La boucle de procédé du fluide vecteur pourra opérer à toute pression requise par les exigences du procédé, et en particulier au voisinage du point critique.

On sait en effet qu'au voisinage du point critique les chaleurs latentes de vaporisation sont très faibles.

On pourra en particulier traiter de cette façon des coupes chromatographiques très diluées en composantes de la charge.

La séparation d'un composant de la charge et du fluide vecteur peut être facilitée si la différence de point d'ébullition entre ces deux corps est grande.

En particulier elle sera avantageusement supérieure à 40°C.

La séparation de la charge et du fluide vecteur peut être facilitée si ce dernier est constitué de molécules carbonées. En particulier il peut s'agir d'un solvant organique.

Avantageusement une molécule du fluide vecteur comporte un squelette carboné et un ou plusieurs atomes choisis parmi le chlore, l'hydrogène, le fluor, en une combinaison quelconque
En particulier il peut s'agir d'un mélange de solvants organiques ou de solvants organiques et d'autres substances volatiles.

En particulier il peut s'agir d'un mélange constitué majoritairement de substances apolaire ou peu polaires et de modificateurs polaires minoritaires.

En particulier il peut s'agir d'un mélange constitué majoritairement de substances polaires et de modificateurs apolaires minoritaires.

Ces mélanges sont bien connus dans l'état de l'art.

Parmi les substances polaires ou modificateurs polaires, on citera l'eau, les alcools à chaines courtes, les nitriles légers, les éthers légers, le chloroforme, etc...

Parmi les substances ou modificateurs apolaires ou peu polaires on citera les hydrocarbures aliphatiques, aromatiques, les halocarbones comme les Fréons, etc..

Un tel procédé suivant l'une quelconque de ses variantes sera d'autant plus efficace que la perte de charge dans le procédé et en particulier au travers du chromatographe qui en est la première cause sera faible.

Avantageusement la perte de charge du fluide vecteur liquide éluant dans le chromatographe est inférieure à 20 bar, de préférence inférieure à 5 bar, et encore plus préférentiellement inférieure à 2 bar.

Suivant une voie privilégiée de réalisation de l'invention, on choisira d'utiliser dans le chromatographe un garnissage comportant dans sa masse des passages vides ou des macropores offrant peu de résistance à l'écoulement d'un fluide et permettant son contact étroit avec une phase stationnaire.

Par passages vides on entend des passages connexes dépourvus de matériau liquide ou solide susceptibles de faire obstacle au passage du gaz vecteur et de générer de la perte de charge.

Ce peuvent être de préférence des pores, des fentes ou des canaux substantiellement rectilignes.

Ce peuvent être des pores telles que celles présentes dans un tissu de type tissé ou non tissé ou toute autre structure fibreuse.

Avantageusement la taille de ces pores ou canaux sera supérieure à 5 µm, et de préférence supérieure à 50 µm.

Avantageusement ce garnissage comporte un garnissage multicapillaire, qui présente une perte de charge très faible.

On nomme garnissage multicapillaire un garnissage présentant une multiplicité de canaux contigus vides, rectilignes, parallèles, homogènes et réguliers, et débouchant de part et d'autre du garnissage.

On notera qu'un aspect privilégié de l'invention consiste dans la combinaison et la sélection d'un garnissage multicapillaire et d'un chromatographe annulaire continu pour effectuer la séparation chromatographique, et d'un fluide vecteur liquide vaporisable couplées à une optimisation énergétique par recompression mécanique de vapeur autour de la vaporisation du fluide vecteur. Cette sélection permet l'obtention d'un procédé chromatographique continu hautement efficace à faible coût énergétique.

De préférence on utilisera un chromatographe ou un arrangement de colonnes chromatographiques permettant un flux quasi continu de fluide vecteur.

On pourra utiliser un lit mobile simulé.

Avantageusement on utilisera un chromatographe annulaire continu de type axial, c'est-à-dire dont l'écoulement se fait suivant l'axe du chromatographe, ou radial, c'est-à-dire dont l'écoulement se fait radialement dans l'appareil de chromatographie.

On va maintenant examiner plus précisément les conditions de réalisation du cas 2.

De préférence dans ce cas, le couplage énergétique est effectué par une recompression mécanique de vapeur, ou RMV, effectuée sur la boucle du fluide vecteur gazeux de façon à améliorer l'efficacité énergétique du procédé.

La recompression mécanique de vapeur peut en particulier être effectué soit directement sur le fluide vecteur en recomprimant celui-ci, soit indirectement à l'aide d'une pompe à chaleur auxiliaire.

Un tel procédé suivant l'une quelconque de ses variantes sera d'autant plus efficace que la perte de charge dans le procédé et en particulier au travers du chromatographe qui en est la première cause sera faible.

Avantageusement la perte de charge du gaz éluant dans le chromatographe est inférieure à 2 bar, de préférence inférieure à 0,5 bar, et encore plus préférentiellement inférieure à 0,2 bar.

En particulier le fluide vecteur pourra être dans un état gazeux proche des conditions critiques dans le chromatographe.

En particulier le fluide vecteur pourra être dans un état proche du point critique lors de sa vaporisation.

Par proche du point critique on entend une zone comprise entre 0,8 et 1,2 fois la pression critique, et entre 0,8 et 1,2 fois la température critique simultanément.

Par proche du point critique on entend plus particulièrement une zone comprise entre 0,9 et 1,1 fois la pression critique, et entre 0,9 et 1,1 fois la température critique simultanément.

On sait en effet qu'au voisinage du point critique les chaleurs latentes de vaporisation sont très faibles.

On sait d'autre part que la productivité du chromatographe augmente en augmentant sa pression de travail, et particulièrement au voisinage du point critique.

On sait aussi que la compression d'un fluide sera d'autant plus économique et facile lorsque le taux de compression requis sera plus faible, et lorsque sa densité sera élevée.

On pourra donc, en opérant le procédé à proximité du domaine critique, condenser et évaporer le fluide vecteur sous l'effet de transfert de puissances modérées au niveau d'un échangeur de condensation du fluide vecteur, comprimer sous de faibles taux de compression des fluides denses, diminuer la taille et le cout de l'installation, et améliorer sa performance énergétique.

On pourra en particulier traiter de cette façon des coupes chromatographiques très diluées en composantes de la charge.

Suivant une voie privilégiée de réalisation de l'invention, on choisira d'utiliser dans le chromatographe un garnissage comportant dans sa masse des passages vides ou des macropores offrant peu de résistance à l'écoulement d'un fluide et permettant son contact étroit avec une phase stationnaire.

Par passages vides on entend des passages connexes dépourvus de matériau liquide ou solide susceptibles de faire obstacle au passage du gaz vecteur et de générer de la perte de charge.

Ce peuvent être de préférence des pores, des fentes ou des canaux substantiellement rectilignes.

Ce peuvent être des pores telles que celles présentes dans un tissu de type tissé ou non tissé ou toute autre structure fibreuse.

Avantageusement la taille de ces pores ou canaux sera supérieure à 5 µm, et de préférence supérieure à 50 µm. Avantageusement ce garnissage comporte un garnissage multicapillaire, qui présente une perte de charge très faible. En effet on diminue ainsi considérablement la quantité d'énergie nécessaire à la recompression mécanique de la vapeur en diminuant l'écart des pressions requises coté chaud et côté froid d'un échangeur de chaleur servant à récupérer l'énergie de vaporisation du fluide vecteur. Le garnissage multicapillaire présente donc une aptitude exceptionnelle à la réalisation de ce procédé qui le font sélectionner de préférence.

On nomme comme précédemment garnissage multicapillaire un garnissage présentant une multiplicité de canaux contigus, rectilignes, parallèles, homogènes et réguliers, et débouchant de part et d'autre du garnissage.

De préférence on utilisera un chromatographe ou un arrangement de colonnes chromatographiques permettant un flux quasi continu de fluide vecteur.

On pourra utiliser un lit mobile simulé.

Avantageusement on utilisera un chromatographe annulaire continu de type axial, c'est-à-dire dont l'écoulement se fait suivant l'axe du chromatographe, ou radial, c'est-à-dire dont l'écoulement se fait radialement dans l'appareil de chromatographie.

Avantageusement des composants de la charge issus du chromatographe sont condensables en des solides avec le fluide vecteur condensé dans les conditions du procédé

Avantageusement ces solides sont séparés par extraction dans un solvant immiscible au fluide vecteur condensé.

Avantageusement ce solvant est introduit dans le mélange en amont du niveau ou au niveau de la condensation du fluide vecteur issu du chromatographe.

En particulier ils peuvent être introduit dans un échangeur de chaleur afin d'éviter l'encrassement de celui-ci par cristallisation ou dépôt de solide sur la surface d'échange de chaleur.

Avantageusement ce solvant est introduit à l'état gazeux dans le mélange en aval de la condensation du fluide vecteur issu du chromatographe avant ou après un compresseur de recompression mécanique de la vapeur.

De cette façon le solvant sert à modifier les caractéristiques éluantes du fluide vecteur dans le chromatographe.

Avantageusement le procédé suivant l'invention est caractérisé en ce que des composants de la charge sont incondensables dans les conditions du procédé.

Avantageusement dans ce cas ils sont séparés par décantation.

Avantageusement des composants issus de la charge sont condensables à l'état liquide dans les conditions du procédé.

L'invention consiste en particulier à utiliser comme fluide vecteur d'un chromatographe préparatif une vapeur condensable et immiscible à l'état liquide avec les produits de la charge séparés, associée à un couplage énergétique entre la condensation de la charge et l'évaporation du fluide vecteur à partir de son état liquide afin d'améliorer l'économie et les performances énergétiques du procédé tout en offrant une grande simplicité d'emploi. De préférence, ce couplage est effectué par une recompression mécanique de vapeur effectuée autour du fluide vecteur de façon à améliorer l'efficacité énergétique du procédé.

La recompression mécanique de vapeur peut en particulier être effectuée soit directement sur le gaz vecteur en recomprimant celui-ci, soit indirectement à l'aide d'une pompe à chaleur auxiliaire travaillant avec un fluide distinct du fluide éluant.

Le procédé consiste donc à condenser totalement ou partiellement le flux de gaz vecteur et de produit issu du chromatographe en faisant intervenir l'évaporation d'un fluide frigorigène. Celui-ci peut en particulier alimenter le second côté d'un échangeur de chaleur à contact indirect. Les coefficients de transfert de chaleur en condensation et évaporation étant excellents, la surface d'échange nécessaire sera faible et l'échangeur compact et peu coûteux.

Un fluide frigorigène est recomprimé et sert à évaporer le fluide vecteur condensé et séparé de l'étape précédente, qui retourne alimenter le chromatographe.

Le fluide frigorigène peut être constitué par le fluide vecteur lui-même, ce qui limite les investissements nécessaires. En particulier le fluide vecteur gazeux condensé et séparé par décantation des molécules de la charge est évaporé sous pression réduite dans les échangeurs servant à condenser les coupes chromatographiques issues du chromatographe, est recomprimé, et alimente le chromatographe en gaz vecteur pur.

On pourra obtenir d'excellentes performances énergétiques, supérieures à celles d'un évaporateur dix effets ou quarante effets par exemples, et rendre la séparation chromatographique peu couteuse en termes de coûts opératoire et d'investissements.

On obtient ainsi une considérable économie d'énergie.

Avantageusement toutes les fractions de gaz vecteur condensées et éventuellement purifiées sont évaporées sous l'action d'un seul compresseur dans le procédé.

La séparation de la charge et du gaz vecteur peut être facilitée si ce dernier est constitué de molécules carbonées.

En particulier il peut s'agir d'une ou d'un mélange de molécules carbonées dont le champ d'application est celui des cycles frigorigènes, comme les Fréons (marque DuPont de Nemours), comportant un ou plusieurs atomes choisis parmi le chlore, l'hydrogène, le fluor, en une combinaison quelconque.

Suivant une voie privilégiée de réalisation de l'invention, décrite ci-dessous, des composés issus de la charge et le fluide vecteur sont immiscibles à l'état condensé et sont liquides a l'issue de l'étape de condensation du fluide vecteur à la sortie du chromatographe. Leur séparation peut être excellente et facile lorsqu'ils sont hautement immiscibles.

C'est en particulier le cas de l'eau et des hydrocarbures aliphatiques, naphténiques, aromatiques, des huiles naturelles et de synthèse, de nombreuses substances organiques artificielles et naturelles. La séparation est alors réalisée de façon extrêmement simplifiée dans un ballon de décantation de très faible coût par exemple.

On pourra ajouter au procédé une étape simple de purification du gaz vecteur condensé décanté et séparé comme un entrainement à la vapeur, une distillation, une extraction liquide liquide, un flash, une séparation par membrane (pervaporation, osmose inverse, nanofiltration, ...) etc...

En particulier lorsque cette purification sera faite par entrainement par la vapeur du fluide vecteur condensé, la production de la vapeur nécessaire pourra être faite en récupérant la puissance cédée au gaz vecteur par le compresseur. Celle-ci se traduit par une surchauffe et donc une chaleur sensible qui peut être récupérée pour évaporer du fluide vecteur sous forme liquide.

Suivant une variante de ce procédé, on pourra réaliser un cycle de pompe à chaleur par RMV autour de cette colonne d'entrainement. Avantageusement cette boucle autour de la colonne et la boucle de fluide vecteur autour du chromatographe utiliseront le même compresseur.

On pourra ajouter au procédé une étape simple de purification de la charge condensée et séparée comme une distillation, un entrainement à la vapeur, une extraction liquide liquide, un flash, une séparation par membrane (pervaporation, osmose inverse, ...) afin de la séparer des dernières traces de fluide vecteur.

Ces traces de fluide vecteur seront avantageusement récupérées et recyclées
Avantageusement on choisira comme gaz vecteur de la vapeur d'eau éventuellement surchauffée avec les charges organiques apolaires ou peu polaires, ou des hydrocarbures aliphatiques éventuellement surchauffés avec les charges polaires ou contenant des liaisons hydrogène. Les hydrocarbures aliphatiques seront choisis de préférence linéaires.

Avantageusement le produit de la charge issu de la séparation aura un point d'ébullition plus élevé que le gaz vecteur, de préférence supérieur de 40 °C à celle-ci au moins, afin de rendre la température d'ébullition de l'azéotrope binaire du produit et du fluide vecteur proche de celle du fluide vecteur pur.

On pourra compléter la boucle procédé par une récupération de l'énergie d'un fluide non condensé issu des condenseurs pour évaporer la charge. Ceci peut faire l'objet d'une seconde boucle de RMV.

On notera qu'un aspect privilégié de l'invention consiste dans la combinaison et la sélection d'un garnissage multicapillaire et d'un chromatographe annulaire continu pour effectuer la séparation chromatographique, d'un gaz vecteur condensable et immiscible à la charge à l'état liquide, et d'une séparation par décantation de ceux-ci après leur condensation, couplées à une optimisation énergétique par recompression mécanique de vapeur autour de la production du gaz vecteur. Cette sélection permet l'obtention d'un procédé chromatographique hautement efficace à faible coût énergétique.

Le gaz vecteur dans le chromatographe pourra opérer à toute température requise par les points d'ébullition des espèces en présence. Dans le cas ou cette température est très supérieure à la température de condensation du gaz vecteur une injection de fluide vecteur liquide a la sortie du chromatographe et en amont des condenseurs, ou désurchauffe, peut permettre d'aider à diminuer la surface d'échange thermique requise en aval. Alternativement un économiseur peut être mis en œuvre sous forme d'un échangeur de chaleur sensible entre les flux d'entrée et de sortie du chromatographe.

La boucle de procédé tournant du fluide vecteur pourra opérer à toute pression requise par les exigences du procédé.

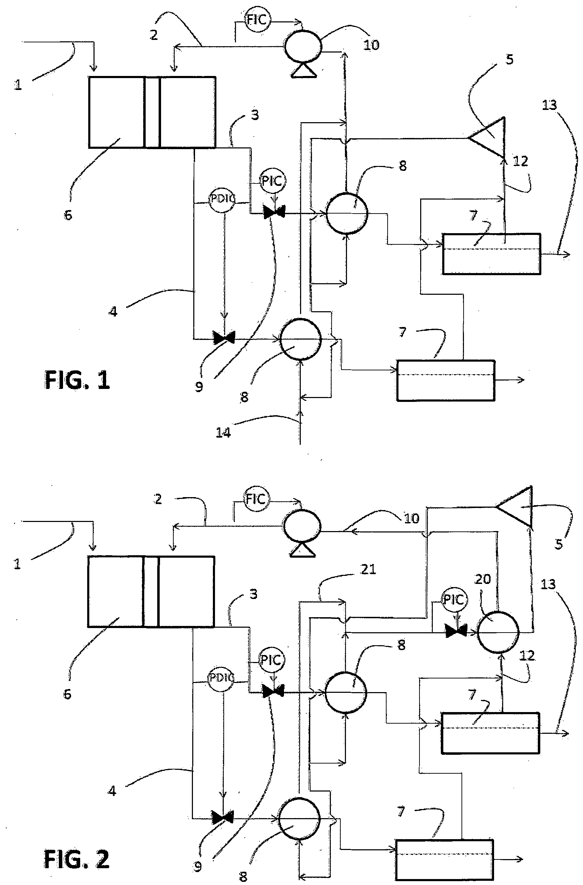

La figure 1 représente un exemple d'un procédé suivant l'invention avec un liquide vecteur servant de fluide frigorigène. Le chromatographe est alimenté par la charge liquide 1 et le fluide vecteur liquide 2. Les effluents liquide 3, 4 sont admis au travers de vannes de contrôle 9 asservies à la pression aval dans un coté des échangeurs de chaleur 8 ou ils se vaporisent. Les fluides partiellement vaporisés sont décantés dans les ballons trois phases 7. La phase liquide légère est par exemple le produit 13. La vapeur 12 est comprimée dans le compresseur 5 et retourne vers l'autre côté des échangeurs 8. La phase vapeur comprimée est condensée sous pression dans les échangeurs 8 en servant à la vaporisation des coupes chromatographiques 3 et 4 afin d'améliorer l'efficacité énergétique du procédé par une recompression mécanique de vapeur (RMV). La pompe 10 véhicule le fluide condensé vers le chromatographe. La référence 14 est un appoint de liquide vecteur. On notera que l'appareil 5 dénommé dans ce texte compresseur pourra être tout appareil capable d'augmenter la pression d'un fluide procédé gazeux, comme par exemple un compresseur rotatif, alternatif, un surpresseur axial, un ou des ventilateurs, un éjecteur. Il va de soi que des purifications complémentaires des différentes phases saturées les unes dans les autres pourront être ajoutées au schéma de flux. On pourra contrôler le procédé comme brièvement décrit sur la figure, PIC signifiant Contrôle et Indication de Pression, PDIC signifiant Contrôle et Indication de Pression Différentielle, LIC signifiant Contrôle et Indication de Niveau.

La figure 2 représente un exemple du procédé suivant l'invention avec une pompe à chaleur externe aux flux procédé. Le chromatographe est alimenté par la charge liquide 1 et le fluide vecteur liquide 2. Les effluents liquide 3, 4 sont admis au travers de vannes de contrôle 9 asservies à la pression aval dans un coté des échangeurs de chaleur à contact indirect 8 ou ils se vaporisent en condensant un fluide frigorigène 21. Les fluides partiellement vaporisés sont décantés dans les ballons 7. La phase liquide est par exemple le produit 13. La vapeur 12 est condensée dans l'échangeur 20 en provoquant l'ébullition du fluide frigorigène mis en dépression par le compresseur 5 et retourne vers le chromatographe. La pompe 10 véhicule le fluide vecteur condensé vers le chromatographe. Le fluide frigorigène vaporisé retourne vers les échangeurs 8. On note que le fluide vecteur travaille dans un tel procédé à une température inférieure aux températures qu'il subit dans la boucle de l'example1 ou il est comprimé dans le compresseur 5. On note que le contrôle d'une telle boucle de procédé complexe présentant plusieurs coupes chromatographiques est indépendante du circuit fluide du côté procédé rendant ainsi son opération plus simple et plus efficace.

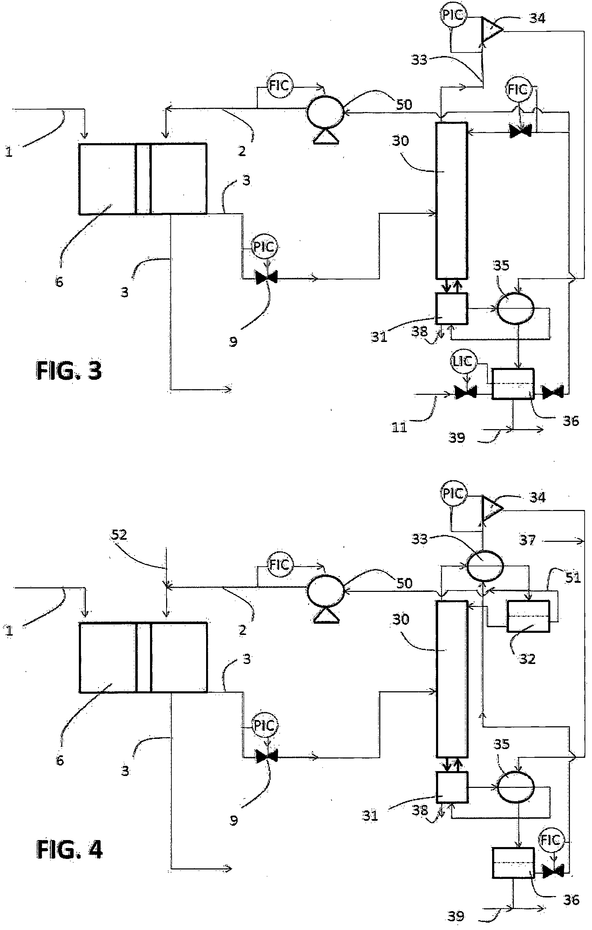

La figure 3 représente un schéma procédé pour lequel le liquide vecteur est introduit à la sortie du chromatographe 6 dans une colonne à distiller 30 et séparé d'un ou de composants de la charge 1. La colonne comporte un rebouilleur 31,35, un condenseur 35 et un ballon de reflux 36. Le rebouilleur et le condenseur sont couplés. On évapore le fluide vecteur liquide dans un coté du rebouilleur 35 et on condense le flux procédé gazeux venant de la tête de colonne mis sous pression par le compresseur 34 pour évaporer la charge dans l'autre côté du rebouilleur 35. La référence 33 est le flux vapeur en tête de colonne. Le fluide vecteur condensé et purifié 2 retourne vers le chromatographe par une pompe 50. La charge concentrée et purifiée est récupérée en pied de colonne 38.

La figure 4 représente un schéma procédé pour lequel le liquide vecteur est introduit à la sortie du chromatographe 6 dans une colonne à distiller 30 et séparé d'un ou de plusieurs composants de la charge 1. La colonne comporte un rebouilleur 31,35, un condenseur 33, et un ballon de reflux 32. Le rebouilleur et le condenseur sont couplés par une pompe à chaleur utilisant une boucle de fluide frigorigène 37. On évapore le fluide vecteur liquide dans un coté du rebouilleur 35 en condensant le fluide frigorigène gazeux 37 mis sous pression dans le compresseur 34 et on condense le flux procédé gazeux venant de la tête de colonne en évaporant le fluide frigorigène liquide mis sous dépression à l'aspiration du compresseur 34. Le fluide vecteur condensé et purifié 2 retourne vers le chromatographe par une pompe 50. La charge concentrée et purifiée est récupérée en pied de colonne 38.

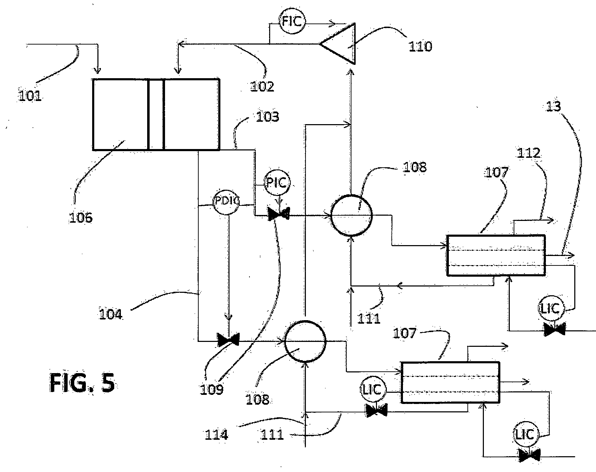

La figure 5 représente un exemple du procédé suivant l'invention avec un gaz vecteur condensable et servant de fluide frigorigène. Les fluides sont tels que la charge liquide est immiscible au gaz vecteur condensé à l'état liquide. Le chromatographe est alimenté par la charge vaporisée 101 et le gaz vecteur 102. Les effluents gazeux 103, 104 sont admis au travers de vannes de contrôle 109 asservies à la pression aval dans les échangeurs de chaleur108 ou ils se condensent. Les vapeurs partiellement condensées sont décantées dans les ballons trois phases 107. La phase liquide légère est par exemple le produit 113. La phase lourde 111 est par exemple le gaz vecteur condensé. La vapeur non condensée 112 est envoyé vers l'aval procédé. La phase lourde 111 est évaporée sous pression réduite dans les échangeurs 108 en servant à la condensation des coupes chromatographiques 104 et 105 afin d'améliorer l'efficacité énergétique du procédé par une recompression mécanique de vapeur (RMV). Le compresseur 110 assure cette dépression, et permet de vaincre la perte de charge du chromatographe, des vannes de contrôle et des échangeurs de chaleur. On notera que l'appareil 110 dénommé dans ce texte compresseur pourra être tout appareil capable d'augmenter la pression d'un fluide procédé gazeux, comme par exemple un compresseur rotatif, alternatif, un surpresseur axial, un ou des ventilateurs, un éjecteur. On notera que l'énergie contenue dans le flux vapeur 112 peut être mise à profit pour vaporiser la charge 101 à l'aide d'une autre RMV. La source d'énergie du procédé devient alors entièrement électrique. Le flux 114 constitue un appoint possible de phase lourde. Il va de soi que des purifications complémentaires des différentes phases saturées les unes dans les autres pourront être ajoutées au schéma de flux. On pourra contrôler le procédé comme brièvement décrit sur la figure, PIC signifiant Contrôle et Indication de Pression, PDIC signifiant Contrôle et Indication de Pression Différentielle, LIC signifiant Contrôle et Indication de Niveau.

On notera que l'on peut intégrer dans une même centrale d'optimisation énergétique une pompe à chaleur sur des coupes procédé différentes concentrées les unes dans un simple ballon de flash, les autres dans des colonnes à distiller. Cette centrale tournera sur la base d'un seul compresseur.

Les structures et appareils décrits dans ce texte pourront être utilisés dans tous les domaines de la chimie, de l'industrie pétrolière, nucléaire et pharmaceutique.

### Exemple

Le tableau ci-dessous exemplifie l'utilisation de fluides frigorigènes différents pour récupérer de l'énergie par RMV lors de la concentration d'un effluent d'un procédé chromatographique utilisant comme fluide vecteur un mélange d'heptane (60 % en poids) et d'éthanol (40% en poids).

| Fluide Frigorigène | Productivité relative | Puissance Compresseur par kg produit (% relatif) |
|---|---|---|
| Heptane60Ethanol40 | 1 | 100 |
| CH2Cl2 | 3.79 | 108,08 |
| CHCl3 | 1.65 | 91,74 |

Pour une installation de récupération énergétique de dimensionnement identique en taille (capacité volumique des compresseurs et surfaces d'échange thermiques), l'utilisation du solvant de procédé comme fluide frigorigène conduit à une productivité médiocre, 3,8 fois inférieure à celle permise en le substituant par le dichlorométhane, et 1,65 fois inférieure à celle permise par le chloroforme .

Cette performance est à mettre en regard de la puissance de compression nécessaire par unité massique de produit fabriqué et donc l'énergie électrique consommée, 10% inférieure en utilisant du chloroforme comme fluide frigorigène.

Le choix final prend en compte les caractéristiques d'inflammabilité et de toxicité en fonction des besoins procédés, le dichlorométhane étant non inflammable et non toxique, le chloroforme étant non inflammable et plus toxique mais plus performant. Le dichlorométhane sera choisi pour des applications alimentaires, le chloroforme pour des applications en chimie de specialité par exemple.

Le tableau suivant montre le nombre d'effets accessible en fonction du taux de compression maximal dans la boucle de réfrigérant pour du dichlorométhane.

| Taux de compression | Nombre d'effets | Surface des échangeurs (indice 1 pour un taux de compression de 3,0) |
|---|---|---|
| 1,3 | 16,99 | 10 |
| 1,5 | 11,08 | 5 |
| 3,0 | 3,95 | 1 |

11 effets sont accessibles avec un taux de compression de 1,5, performance inaccessible par un multiple effet classique sans recompression mécanique de vapeur.

Le nombre d'effets est le rapport entre la consommation énergétique du procédé nécessaire à l'évaporation du fluide vecteur liquide et la quantité d'énergie latente de vaporisation nécessaire à l'évaporation du fluide vecteur liquide

## Revendications

1. Procédé de chromatographie en phase liquide, gazeuse ou supercritique dans lequel on fait circuler, sur un chromatographe (6) contenant une phase stationnaire, une charge (1) comprenant des composants à séparer entraînée par un fluide vecteur (2), ledit procédé étant **caractérisé en ce que** :
(a) on obtient à la sortie du chromatographe une pluralité de coupes chromatographiques (3, 4) comprenant au moins un composant de la charge et le fluide vecteur dans une première phase fluide,
(b) on impose un changement d'état à au moins une desdites coupes chromatographiques (3, 4) de sorte à obtenir au moins une coupe de fluide vecteur purifié dans une deuxième phase fluide différente de la première phase fluide en séparant ledit fluide vecteur du composant de la charge,
(c) on impose un changement d'état inverse de celui de l'étape (b) à au moins une coupe de fluide vecteur purifié obtenue à l'étape (b) de façon à obtenir au moins une coupe de fluide vecteur purifié dans une troisième phase fluide différente de la deuxième phase fluide,
et **en ce que** l'on couple les énergies de changement d'état de la première phase fluide à la deuxième phase fluide et de la deuxième phase fluide à la troisième phase fluide de la même ou d'une autre coupe de fluide vecteur purifié, ledit couplage comprenant un transfert de chaleur à l'aide d'une pompe à chaleur.

2. Procédé selon la revendication 1, **caractérisé en ce que** la pompe à chaleur met en œuvre une recompression de vapeur du fluide vecteur dans un flux dudit fluide vecteur dans le procédé de chromatographie.

3. Procédé selon la revendication 1, **caractérisé en ce que** ladite pompe à chaleur met en œuvre une recompression de vapeur d'un fluide frigorigène différent du fluide vecteur dans un flux de fluide externe au procédé de chromatographie.

4. Procédé selon l'une quelconque des revendications 1 à 3 **caractérisé en ce que** la première phase fluide est liquide, la deuxième phase fluide est gazeuse et la troisième phase fluide est liquide, la pluralité de coupes chromatographiques (3, 4) obtenues à la sortie du chromatographe comprenant au moins un composant de la charge et le fluide vecteur à l'état liquide, et **en ce que** :
- à l'étape (b), on vaporise au moins une desdites coupes chromatographiques de sorte à obtenir d'une part ledit composant de la charge à l'état liquide concentré et d'autre part le fluide vecteur purifié à l'état de vapeur,
- à l'étape (c), on condense ledit fluide vecteur purifié obtenu à l'étape (b),
- au moins une partie de l'énergie de la condensation du fluide vecteur vaporisé est récupérée et utilisée pour fournir au moins une partie de l'énergie nécessaire à la vaporisation du fluide vecteur d'au moins une coupe chromatographique.

5. Procédé selon l'une quelconque des revendications 1 à 3, **caractérisé en ce que** la première phase fluide est gazeuse, la deuxième phase fluide est liquide et la troisième phase fluide est gazeuse, la pluralité de coupes chromatographiques obtenues à la sortie du chromatographe comprenant chacune au moins un composant de la charge et le fluide vecteur à l'état gazeux, et **en ce que** :
- à l'étape (b), on condense au moins une desdites coupes chromatographiques de sorte à séparer un composant de la charge et le fluide vecteur condensé,
- à l'étape (c), on vaporise le fluide vecteur condensé obtenu à l'étape (b) et on introduit ledit fluide à l'état gazeux dans le chromatographe,
- au moins une partie de l'énergie dégagée par la condensation de ladite au moins une coupe chromatographique est utilisée pour fournir au moins une partie de l'énergie nécessaire à ladite vaporisation du fluide vecteur condensé.

6. Procédé selon l'une quelconque des revendications 1 à 3 **caractérisé en ce que** la première phase fluide est à l'état supercritique, la deuxième phase fluide est liquide et la troisième phase fluide est à l'état gazeux ou supercritique, la pluralité de coupes chromatographiques obtenues à la sortie du chromatographe comprenant chacune au moins un composant de la charge et le fluide vecteur à l'état supercritique, et **en ce que** :
- à l'étape (b), on condense au moins une desdites coupes chromatographiques de sorte à séparer un composant de la charge et le fluide vecteur condensé,
- à l'étape (c), on vaporise le fluide vecteur condensé obtenu à l'étape (b) et on introduit ledit fluide à l'état supercritique dans le chromatographe,
- au moins une partie de l'énergie dégagée par la condensation de ladite au moins une coupe chromatographique est utilisée pour fournir au moins une partie de l'énergie nécessaire à ladite vaporisation du fluide vecteur condensé.

7. Procédé selon l'une quelconque des revendications 5 ou 6, **caractérisé en ce que** au moins un composant de la charge et au moins une partie du fluide vecteur sont condensables simultanément dans des liquides substantiellement immiscibles et séparables par décantation dans les conditions du procédé.

8. Procédé selon la revendication 2 ou 3, **caractérisé en ce que** la recompression de vapeur est effectuée par un éjecteur dont le fluide moteur à une composition proche de celle du fluide entraîné.

9. Procédé selon la revendication 2 ou 3, **caractérisé en ce que** la recompression de vapeur est effectuée par recompression mécanique de vapeur.

10. Procédé selon l'une quelconque des revendications 2 à 9, **caractérisé en ce que** la compression est mise en œuvre par au moins un compresseur dont le rapport de compression est inférieur à 3, de préférence inférieur à 1,5, et plus préférentiellement inférieur à 1,15.

11. Système de chromatographie en phase liquide, gazeuse ou supercritique comprenant un chromatographe (6) contenant une phase stationnaire destiné à la circulation d'une charge (1) comprenant des composants à séparer entraînée par un fluide vecteur (2) et à l'obtention d'une pluralité de coupes chromatographiques comprenant au moins un composant de la charge et le fluide vecteur dans une première phase fluide, ledit système étant **caractérisé en ce qu'**il comprend :
- un moyen adapté pour imposer un premier changement d'état à au moins une desdites coupes chromatographiques (3, 4) de sorte à purifier le fluide vecteur dans une deuxième phase fluide différente de la première phase fluide en le séparant du composant de la charge,
- un moyen adapté pour imposer à au moins une coupe de fluide vecteur purifié un second changement d'état inverse du premier de façon à obtenir une troisième phase fluide différente de la deuxième phase fluide, et
- une pompe à chaleur adaptée pour coupler les énergies du premier et du second changement d'état.

## Patentansprüche

1. Ein Flüssigkeits-, Gas- oder überkritisches Chromatographieverfahren, bei dem eine Ladung (1), die zu trennende Komponenten umfasst, die von einer Trägerflüssigkeit (2) mitgerissen werden sollen, auf einem Chromatographen (6) zirkuliert, der eine stationäre Phase enthält, wobei das Verfahren dadurch charakterisiert werden:
(a) am Ausgang des Chromatographen werden mehrere chromatographische Schnitte (3, 4) erhalten, die mindestens eine Komponente der Ladung und die Trägerflüssigkeit in einer ersten flüssigen Phase umfassen;
(b) mindestens einem der chromatographischen Abschnitte (3, 4) wird eine Zustandsänderung auferlegt, um in einem zweiten Abschnitt mindestens einen Abschnitt gereinigter Trägerflüssigkeit zu erhalten Fluidphase, die sich von der ersten Fluidphase unterscheidet, indem das Trägerfluid von der Komponente der Ladung getrennt wird,
(c) mindestens einem Schnitt gereinigter Vektorflüssigkeit, der in Schritt (b) erhalten wurde, wird eine Änderung des umgekehrten Zustands gegenüber der von Schritt (b) auferlegt, um mindestens einen Schnitt gereinigter Vektorflüssigkeit in a zu erhalten dritte flüssige Phase, die sich von der zweiten flüssigen Phase unterscheidet,
und indem die Energien der Zustandsänderung von der ersten Fluidphase zur zweiten Fluidphase und von der zweiten Fluidphase zur dritten Fluidphase desselben oder eines anderen Abschnitts gereinigten Trägerfluids gekoppelt werden; wobei die Kupplung eine Wärmeübertragung unter Verwendung einer Wärmepumpe umfasst.

2. Verfahren nach Anspruch 1, **dadurch gekennzeichnet, dass** die Wärmepumpe eine Dampfrekompression des Trägerfluids in einem Strom des Trägerfluids im Chromatographieprozess implementiert.

3. Verfahren nach Anspruch 1, **dadurch gekennzeichnet, dass** die Wärmepumpe eine Dampfrekompression eines von der Trägerflüssigkeit verschiedenen Kältemittels in einem Flüssigkeitsstrom außerhalb des Chromatographieprozesses durchführt.

4. Verfahren nach einem der Ansprüche 1 bis 3, das **dadurch gekennzeichnet ist, dass** die erste flüssige Phase flüssig ist, die zweite flüssige Phase gasförmig ist und die dritte flüssige Phase flüssig ist, wobei die mehreren chromatographischen Abschnitte (3, 4) erhalten werden am Auslass des Chromatographen, der mindestens eine Komponente der Ladung und der Trägerflüssigkeit im flüssigen Zustand umfasst, und darin:
- in Schritt (b) wird mindestens einer der chromatographischen Abschnitte verdampft, um einerseits die Komponente der Ladung im konzentrierten flüssigen Zustand und andererseits die gereinigte Trägerflüssigkeit im Zustand von zu erhalten Dampf,
- in Schritt (c) wird die gereinigte Trägerflüssigkeitk ondensiert, die in Schritt (b) erhalten wurde,
- mindestens ein Teil der Energie der Kondensation der verdampften Vektorflüssigkeit wird zurückgewonnen und verwendet, um mindestens einen Teil der Energie zu liefern, die für die Verdampfung der Vektorflüssigkeit von mindestens u erforderlich ist, schneidet nicht chromatographisch.

5. Verfahren nach einem der Ansprüche 1 bis 3, **gekennzeichnet dadurch, dass** die erste flüssige Phase gasförmig ist, die zweite flüssige Phase flüssig ist und die dritte flüssige Phase gasförmig ist, wobei die Vielzahl von Chromatographieschnitten am Auslass erhalten wird einen Chromatographen, der jeweils mindestens eine Komponente der Ladung und der Trägerflüssigkeit im gasförmigen Zustand umfasst, und darin:
- in Schritt (b) wird mindestens einer der chromatographischen Abschnitte kondensiert, um eine Komponente der Ladung und die kondensierte Vektorflüssigkeit zu trennen.
- in Schritt (c) wird das in Schritt (b) erhaltene kondensierte Trägerfluid verdampft und das Fluid im gasförmigen Zustand in den Chromatographen eingeführt,
- mindestens ein Teil der Energie, die durch die Kondensation des mindestens einen chromatographischen Abschnitts freigesetzt wird, wird verwendet, um mindestens einen Teil der Energie zu liefern, die für die Verdampfung des kondensierten Trägerfluids erforderlich ist.

6. Verfahren nach einem der Ansprüche 1 bis 3, **gekennzeichnet dadurch, dass** die erste flüssige Phase im überkritischen Zustand ist, die zweite flüssige Phase flüssig ist und die dritte flüssige Phase im gasförmigen oder überkritischen Zustand ist; die Vielzahl von Chromatographieschnitten, die am Auslass des Chromatographen erhalten werden und jeweils mindestens eine Komponente der Ladung und der Trägerflüssigkeit im überkritischen Zustand umfassen, und darin:
- in Schritt (b) wird mindestens einer der chromatographischen Abschnitte kondensiert, um eine Komponente der Ladung und die kondensierte Vektorflüssigkeit zu trennen,
- in Schritt (c) wird das in Schritt (b) erhaltene kondensierte Trägerfluid verdampft und das Fluid im überkritischen Zustand in den Chromatographen eingeführt,
- mindestens ein Teil der durch Faditkondensation freigesetzten Energie wird verwendet, um mindestens einen Teil der für die Verdampfung der kondensierten Trägerflüssigkeit erforderlichen Energie bereitzustellen.

7. Verfahren nach einem der Ansprüche 5 oder 6, **dadurch gekennzeichnet, dass** mindestens eine Komponente der Beschickung und mindestens ein Teil der Trägerflüssigkeit gleichzeitig in Flüssigkeiten kondensierbar sind, die unter den Bedingungen des Verfahrens im wesentlichen nicht mischbar und durch Dekantieren trennbar sind.

8. Verfahren nach Anspruch 2 oder 3, **dadurch gekennzeichnet, dass** die Dampfrekompression von einem Ejektor durchgeführt wird, dessen Arbeitsfluid eine Zusammensetzung aufweist, die der des mitgerissenen Fluids nahe kommt.

9. Verfahren nach Anspruch 2 oder 3, **dadurch gekennzeichnet, dass** die Dampfrekompression durch mechanische Dampfrekompression durchgeführt wird.

10. Verfahren nach einem der Ansprüche 2 bis 9, **gekennzeichnet dadurch, dass** die Kompression durch mindestens einen Kompressor implementiert wird, dessen Kompressionsverhältnis weniger als 3, vorzugsweise weniger als 1,5 und bevorzugter ist weniger als 1,15.

11. Flüssigkeits-, Gas- oder überkritisches Chromatographiesystem, umfassend einen Chromatographen (6), der eine stationäre Phase enthält, die zur Zirkulation einer Ladung (1) bestimmt ist, die Komponenten umfasst, die von einer Trägerflüssigkeit (2) mitgerissen werden sollen, und zu Erhalten einer Vielzahl von chromatographischen Schnitten, die mindestens eine Komponente der Ladung und das Trägerfluid in einer ersten Fluidphase umfassen, wobei das System **dadurch gekennzeichnet ist, dass** es umfasst:
- ein Mittel, das geeignet ist, mindestens einem der chromatographischen Abschnitte (3, 4) eine erste Zustandsänderung aufzuerlegen, um das Trägerfluid in einer zweiten Fluidphase zu reinigen, die sich von der ersten Fluidphase unterscheidet, indem es von der Komponente der Ladung getrennt wird,
- ein Mittel, das geeignet ist, mindestens einem Abschnitt des gereinigten Trägerfluids eine zweite Zustandsänderung gegenüber der ersten aufzuerlegen, um eine dritte Fluidphase zu erhalten, die sich von der zweiten Fluidphase unterscheidet, und
- eine Wärmepumpe, die die Energien der ersten und der zweiten Zustandsänderung koppelt.

## Claims

1. A liquid, gas or supercritical chromatography process in which a charge (1) comprising components to be separated entrained by a carrier fluid (2) is circulated on a chromatograph (6) containing a stationary phase, said process being **characterized in that**:
(a) a plurality of chromatographic sections (3, 4) are obtained at the outlet of the chromatograph comprising at least one component of the charge and the carrier fluid in a first fluid phase,
(b) a change of state is imposed on at least one of said chromatographic sections (3, 4) so as to obtain at least one section of purified carrier fluid in a second. fluid phase different from the first fluid phase by separating said carrier fluid from the component of the charge,
(c) a reverse state change from that of step (b) is imposed on at least one cut of purified vector fluid obtained in step (b) so as to obtain at least one cut of purified vector fluid in a third fluid phase different from the second fluid phase,
and **in that** the energies of change of state are coupled from the first fluid phase to the second fluid phase and from the second fluid phase to the third fluid phase of the same or of another section of purified carrier fluid, said coupling comprising a heat transfer using a heat pump.

2. Method according to claim 1, **characterized in that** the heat pump implements a vapor recompression of the carrier fluid in a flow of said carrier fluid in the chromatography process.

3. Method according to claim 1, **characterized in that** said heat pump implements a vapor recompression of a refrigerant different from the carrier fluid in a flow of fluid external to the chromatography process.

4. Method according to any one of claims 1 to 3 **characterized in that** the first fluid phase is liquid, the second fluid phase is gaseous and the third fluid phase is liquid, the plurality of chromatographic sections (3, 4) obtained at the outlet of the chromatograph comprising at least one component of the charge and the carrier fluid in the liquid state, and **in that**:
- in step (b), at least one of said chromatographic sections is vaporized so as to obtain, on the one hand, said component of the feed in the concentrated liquid state and, on the other hand, the purified carrier fluid in the state of steam,
- in step (c), said purified carrier fluid is condensed obtained in step (b},
- at least part of the energy of the condensation of the vaporized vector fluid is recovered and used to supply at least part of the energy necessary for the vaporization of the vector fluid of at least u, does not chromatographic cut.

5. Method according to any one of claims 1 to 3, **characterized in that** the first fluid phase is gaseous, the second fluid phase is liquid and the third fluid phase is gaseous, the plurality of chromatographic sections obtained at the outlet a chromatograph each comprising at least one component of the charge and the carrier fluid in the gaseous state, and **in that**:
- in step (b), at least one of said chromatographic sections is condensed so as to separate a component of the charge and the condensed vector fluid,
- in step (c), the condensed carrier fluid obtained in step (b) is vaporized and said fluid is introduced in the gaseous state into the chromatograph,
- at least part of the energy released by the condensation of said at least one chromatographic section is used to supply at least part of the energy necessary for said vaporization of the condensed carrier fluid.

6. Method according to any one of claims 1 to 3 **characterized in that** the first fluid phase is in the super-critical state, the second fluid phase is liquid and the third fluid phase is in the gaseous or supercritical state, the plurality of chromatographic sections obtained at the outlet of the chromatograph each comprising at least one component of the charge and the carrier fluid in the supercritical state, and **in that**:
- in step (b), at least one of said chromatographic sections is condensed so as to separate a component of the charge and the condensed vector fluid,
- in step (c), the condensed carrier fluid obtained in step (b) is vaporized and said fluid is introduced in the supercritical state into the chromatograph,
- at least part of the energy released by said condensation of at least one chromatographic section is used to provide at least part of the energy necessary for said vaporization of the condensed carrier fluid.

7. Method according to any one of claims 5 or 6, **characterized in that** at least one component of the feed and at least part of the carrier fluid are condensable simultaneously in liquids which are substantially immiscible and separable by decantation under the conditions of the process.

8. Method according to claim 2 or 3, **characterized in that** the vapor recompression is carried out by an ejector whose working fluid has a composition close to that of the entrained fluid.

9. Method according to claim 2 or 3, **characterized in that** the vapor recompression is carried out by mechanical vapor recompression.

10. Method according to any one of claims 2 to 9, **characterized in that** the compression is implemented by at least one compressor whose compression ratio is less than 3, preferably less than 1.5, and more preferably less than 1.15.

11. Liquid, gas or supercritical chromatography system comprising a chromatograph (6) containing a stationary phase intended for the circulation of a charge (1) comprising components to be separated entrained by a carrier fluid (2) and to the obtaining a plurality of chromatographic sections comprising at least one component of the charge and the carrier fluid in a first fluid phase, said system being **characterized in that** it comprises:
- means adapted to impose a first change of state on at least one of said chromatographic sections (3, 4) so as to purify the carrier fluid in a second fluid phase different from the first fluid phase by separating it from the component of the charge,
- means adapted to impose on at least one section of purified carrier fluid a second change of state opposite to the first so as to obtain a third fluid phase different from the second fluid phase, and
- a heat pump adapted to couple the energies of the first and second state changes.
